# EUROPÄISCHE PATENTSCHRIFT

(11) **EP 3 463 803 B1**
(45) Veröffentlichungstag und Bekanntmachung des Hinweises auf die Patenterteilung: **24.11.2021**
(21) Anmeldenummer: 17726598.0
(22) Anmeldetag: 23.05.2017
(51) Int. Cl.: B29C 53/58, B29C 53/60, F03D 1/00, B29C 33/30, B29C 53/82, B29L 31/08

(54) **WICKELKERN UND VERFAHREN ZUR HERSTELLUNG VON BLATTENDEN, FORM UND VERFAHREN ZUR HERSTELLUNG VON HINTERKANTENSEGMENTEN, WINDENERGIEANLAGE, ROTORBLATTSERIE, ROTORBLATT UND VERFAHREN ZU SEINER HERSTELLUNG**
WINDING MANDREL AND PROCESS FOR MANUFACTURING BLADE TIPS, MOLD AND PROCESS FOR MANUFACTURING TRAILING EDGE SEGMENTS, WIND TURBINE, ROTOR BLADE SERIES, ROTOR BLADE AND PROCESS FOR ITS MANUFACTURING
MANDRIN D'ENROULEMENT ET PROCÉDÉ DE FABRICATION DE POINTES DE LAME, MOULE ET PROCÉDÉ DE FABRICATION DE SEGMENTS DE BORD DE FUITE, ÉOLIENNE, SÉRIE DE PALES DE ROTOR, PALE DE ROTOR ET PROCÉDÉ DE SA FABRICATION

(30) Priorität: 26.05.2016 DE 102016109761
(43) Veröffentlichungstag der Anmeldung: 10.04.2019
(73) Patentinhaber: Wobben Properties GmbH, 26607 Aurich (DE)
(72) Erfinder: HOFFMANN, Alexander, 26721 Emden (DE)
(74) Vertreter: Eisenführ Speiser
(86) Internationale Anmeldenummer: PCT/EP2017/062397
(87) Internationale Veröffentlichungsnummer: WO 2017/202838

(56) Entgegenhaltungen:
- DE-A1-102008 055 580
- DE-A1-102008 055 580
- DE-A1-102012 223 810
- DE-A1-102013 204 635
- US-A1- 2012 279 636

## Beschreibung

Die Erfindung betrifft einen Wickelkern zur Herstellung von Blattenden für Rotorblätter von Windenergieanlagen und eine Form zur Herstellung von Hinterkantensegmenten für Rotorblätter von Windenergieanlagen, insbesondere für Blattenden von Rotorblättern von Windenergieanlagen. Ferner betrifft die Erfindung ein Verfahren zur Herstellung eines Blattendes eines Rotorblatts einer Windenergieanlage, ein Verfahren zur Herstellung eines Hinterkantensegments für ein Rotorblatt einer Windenergieanlage, insbesondere für ein Blattende eines Rotorblatts einer Windenergieanlage, und ein Verfahren zur Herstellung eines Rotorblatts einer Windenergieanlage. Die Erfindung betrifft ferner ein Rotorblatt für eine Windenergieanlage, eine Windenergieanlage sowie eine Rotorblattserie für Windenergieanlagen.

Windenergieanlagen sind bekannt und der derzeit gängigste Typ einer Windenergieanlage ist eine sogenannte Horizontalachsenwindenergieanlage, üblicherweise mit drei Rotorblättern. Solche Windenergieanlagen weisen zunehmend eine größere Bauform auf, nämlich insbesondere höhere Naben- oder Achshöhen und größere Rotordurchmesser mit entsprechend größerem Generator und größerer Einspeiseleistung. Größere Rotordurchmesser bedeuten längere Rotorblätter, die von ihrer Fertigungsstätte zum jeweiligen Aufbauort transportiert und dort installiert werden müssen. Aus der DE 10 2014 206 670 A1 ist beispielsweise ein geteiltes Rotorblatt mit einem Rotorblattinnenteil oder Rotorblattende und einem Rotorblattaußenteil oder Außenblatt bekannt. Ferner sind aus der DE 10 2013 204 635 A1 eine Vorrichtung und ein Verfahren zur Herstellung von Blattenden im Wickelverfahren bekannt. Eine Vorrichtung zur Herstellung von Rotorblattschalen unterschiedlicher Größe und Form ist auch der DE 10 2014 001 445 B4 bekannt.

Größere Rotordurchmesser mit längeren Rotorblättern stellen hohe Anforderungen an die Produktion dieser Rotorblätter, deren Design, insbesondere im Hinblick auf die Aerodynamik, sowie deren Belastungsfähigkeit. Insbesondere sind die Entwicklung und die Produktion von Rotorblättern für Windenergieanlagen mit unterschiedlichen Rotordurchmessern, insbesondere mit wachsenden Rotordurchmessern, mit einem hohen Aufwand hinsichtlich Zeit und Kosten verbunden.

Aus der US 2012/0279636 A1 ist eine Vorrichtung zum Gewebewickeln auf einem einteiligen Dorn bekannt. Eine Formvorrichtung zur Herstellung einer Halbschale für ein Rotorblatt für eine Windenergieanlage mit einer Hauptform und einem Einleger ist aus der DE 10 2012 223 810 A1 bekannt.

Das Deutsche Patent- und Markenamt hat in der Prioritätsanmeldung zu vorliegender Anmeldung folgenden Stand der Technik recherchiert: DE 43 35 221 C1, DE 10 2014 001 15445 B4, DE 10 2008 055 580 A1, DE 10 2013 204 635 A1 und DE 10 2014 206 670 A1.

Es ist daher eine Aufgabe der vorliegenden Erfindung, zumindest eines der genannten Probleme zu adressieren. Insbesondere soll eine Lösung vorgeschlagen werden, bei der die Wirtschaftlichkeit erhöht und/oder der Aufwand für das Design und/oder die Herstellung und/oder den Transport von Rotorblättern reduziert wird.

Diese Aufgabe wird erfindungsgemäß gelöst durch einen Wickelkern zur Herstellung von Blattenden für Rotorblätter von Windenergieanlagen, mit einem ersten Abschnitt mit einem ersten Ende zur Formung einer Nabenanschlussgeometrie zum Anschließen des Blattendes an eine Rotornabe, einem zweiten Abschnitt mit einem zweiten Ende zur Formung einer Außenblattanschlussgeometrie zum Anschließen des Blattendes an ein Außenblatt, wobei durch Austausch oder vollständiges oder teilweises Entfernen des ersten Abschnitts eine Längserstreckung des Wickelkerns und/oder ein Durchmesser des ersten Abschnitts und/oder eine Form des ersten Abschnitts derart variierbar ist, dass damit hergestellte Blattenden für Windenergieanlagen mit unterschiedlichen Rotordurchmessern geeignet sind.

Der Wickelkern weist einen ersten und einen zweiten Abschnitt auf, die vorzugsweise lösbar miteinander verbindbar bzw. verbunden sind. Der zweite Abschnitt kann ausgetauscht oder vollständig oder teilweise entfernt werden. Auf diese Weise können mit dem Wickelkern Blattenden hergestellt werden, die für unterschiedliche Rotorblattdurchmesser von Windenergieanlagen geeignet sind. Hierzu wird durch den Austausch oder das vollständige oder teilweise Entfernen des ersten Abschnitts der Wickelkern variiert, insbesondere hinsichtlich seiner Längserstreckung und/oder seines Durchmessers, beispielsweise seines Innendurchmessers und/oder seines Außendurchmessers, und/oder seiner Form. Durch solche variierten bzw. veränderten Wickelkerne entstehen dann entsprechend unterschiedliche Blattenden. Die Variation des Wickelkerns ist dabei derart realisiert, dass die damit hergestellten Blattenden für Windenergieanlagen mit unterschiedlichen Rotordurchmessern geeignet sind, insbesondere unterschiedliche Längserstreckungen aufweisen.

Dies kann insbesondere dadurch realisiert sein, dass ein mit dem ersten und zweiten Abschnitt des Wickelkerns hergestelltes erstes Blattende für eine erste Windenergieanlage mit einem ersten Rotordurchmesser geeignet ist und ein zweites Blattende, das mit einem Wickelkern mit ausgetauschtem oder vollständig oder teilweise entferntem ersten Abschnitt hergestellt ist, für eine zweite Windenergieanlage mit einem zweiten Rotordurchmesser geeignet ist, wobei der zweite Rotordurchmesser vom ersten Rotordurchmesser verschiedenen ist. Vorzugsweise weisen die beiden so hergestellten Blattenden eine unterschiedliche Längserstreckung auf, so dass auch bei einer Kombination der beiden Blattenden mit gleich ausgebildeten Außenblättern unterschiedliche Rotorblätter entstehen, insbesondere Rotorblätter mit unterschiedlicher Längserstreckung.

Die Erfindung beruht unter anderem auf der Erkenntnis, dass eine Anpassung von Rotorblättern auf unterschiedliche Rotordurchmesser, insbesondere bei geteilten Rotorblättern, besonders wirtschaftlich und aufwandsparend durch eine Veränderung des Blattendes realisiert werden kann. Insbesondere eine Variation der Längserstreckung und/oder des Durchmessers, insbesondere des Innen- und/oder Außendurchmessers, insbesondere an einem ersten, der Rotornabe zugewandten, Ende des Blattendes, und/oder der Form des Blattendes kann eine Anpassung eines Rotorblatts, das ein solches Blattende aufweist, an unterschiedliche Rotordurchmesser ermöglichen und/oder erleichtern.

Ein Wickelkern dient in der Regel dazu, mit einem Faserverbundwerkstoff, der vorzugsweise bahnförmig ausgebildet ist und/oder bahnförmig bereitgestellt wird, umwickelt zu werden. Hierzu rotiert in der Regel, vorzugsweise motorisch angetrieben, der Wickelkern, während der Faserverbundwerkstoff dem Wickelkern zu gefördert wird.

Ferner vorzugsweise vollzieht der Wickelkern und/oder der Faserverbundwerkstoff beim Wickeln eine translatorische Bewegung in Richtung der Längserstreckung des Wickelkerns, um den Wickelkern entlang seiner gesamten Längserstreckung zu umwickeln, da die Längserstreckung des Wickelkerns in der Regel breiter ist als die Bahnbreite des Faserverbundwerkstoffs.

Vorzugsweise wird der Faserverbundwerkstoff mit einem Matrixmaterial getränkt, beispielsweise in einer Tränkeinrichtung. In diesem Stadium ist das Matrixmaterial vorzugsweise flüssig und/oder fließfähig. Vorzugsweise wird der mit Matrixmaterial getränkte Faserverbundwerkstoff nach Abschluss des Wickelns ausgehärtet, so dass ein ausgehärtet Faserverbundblattende entsteht, das dann vom Wickelkern entfernt werden kann. Das Blattende kann mit einem oder mehreren Anbauteilen, wie beispielsweise einem Außenblatt und/oder einem Hinterkantensegment und/oder einer Blattspitze, verbunden werden, um ein Rotorblatt zu bilden. Hierzu weist das Blattende vorzugsweise eine Nabenanschlussgeometrie an der Stirnseite auf, die im Einbauzustand der Rotornabe zugewandt ist. Ferner weist das Blattende vorzugsweise eine Außenblattanschlussgeometrie auf, die bevorzugt an der Stirnseite angeordnet ist, die im Einbauzustand der Rotornabe abgewandt und dem Außenblatt zugewandt ist.

Ein Blattende und/oder ein Hinterkantensegment und/oder ein Außenblatt kann bzw. können auch als Rotorblatt-Halbzeug bezeichnet werden.

Die Anschlussgeometrien des Blattendes werden unter anderem durch die Form eines ersten und zweiten Endes des Wickelkerns bedingt. Das erste Ende des Wickelkerns dient vorzugsweise dem Formen der Nabenanschlussgeometrie des Blattendes und ein zweites Ende des Wickelkerns dient vorzugsweise dem Formen der Außenblattanschlussgeometrie des Blattendes.

Der erfindungsgemäße Wickelkern hat den Vorteil, dass mit einem Wickelkern verschiedene Blattenden und damit auch verschiedene Rotorblätter hergestellt werden können, wodurch schnell, flexibel und/oder kostengünstig Windenergieanlagen mit verschiedenen Rotordurchmessern realisiert werden können, insbesondere auch an verschiedenen, teilweise entlegenen, Standorten.

Durch die Verwendung des gleichen, wenn auch variablen, Wickelkerns und insbesondere wenn zur Herstellung der Rotorblätter mit unterschiedlicher Längserstreckung die gleichen Außenblätter verwendet werden, können große Serieneffekte in der Produktion bzw. Herstellung entstehen, was Kosten- und Qualitätsvorteile haben kann. Weiterhin hat eine solche Gestaltung Vorteile im Hinblick auf einen geringen Änderungsaufwand und einen geringen Aufwand für die Serienpflegebetreuung, einen geringeren Aufwand für die Zertifizierung, einen geringeren Aufwand für Tests und Prüfungen sowie einen geringen Aufwand für die Prototypenbetreuung. Auch der Flächenbedarf in Produktionsstätten kann reduziert werden, da mit einem Wickelkern viele verschiedene Blattenden hergestellt werden können, und nicht für jedes unterschiedliche Blattende ein separater Wickelkern vorgehalten werden muss. Auch bei der Konstruktion und dem Design (neuer) Rotorblätter und Blattenden kann der Aufwand deutlich reduziert werden. Schließlich ergeben sich ferner Vorteile beim Transport und der Logistik.

Gemäß einer bevorzugten Ausführungsform des Wickelkerns ist vorgesehen, dass beim vollständigen Entfernen des ersten Abschnitts ein erstes Ende des zweiten Abschnitts zur Formung der Nabenanschlussgeometrie dient. Zur Herstellung einer anderen Variante eines Blattendes, insbesondere zur Herstellung eines Blattendes mit einer verkürzten Längserstreckung, kann der erste Abschnitt des Wickelkerns entfernt werden. In diesem Fall dient das erste, dem zweiten Ende des zweiten Abschnitts vorzugsweise gegenüberliegende, Ende des zweiten Abschnitts zur Formung der Nabenanschlussgeometrie eines Blattendes. In diesem Fall erstreckt sich das Blattende im Wesentlichen vom ersten zum zweiten Ende des zweiten Abschnitts des Wickelkerns. Da das zweite Ende des zweiten Abschnitts zur Formung der Außenblattanschlussgeometrie dient, dient in diesem Fall vorzugsweise das dem zweiten Ende gegenüberliegende erste Ende des zweiten Abschnitts zur Formung der Nabenanschlussgeometrie.

Erfindungsgemäß ist vorgesehen, dass der erste Abschnitt zwei, drei oder mehr Wickelkernsegmente aufweist. Die zwei, drei oder mehr Wickelkernsegmente sind vorzugsweise in Längsrichtung hintereinander angeordnet. Ferner ist bevorzugt, dass die zwei, drei oder mehr Wickelkernsegmente in Längsrichtung mit ihrem jeweils benachbarten Wickelkernsegment bzw. ihren jeweils benachbarten Wickelkernsegmenten lösbar verbunden sind. Diese Anordnung der Wickelkernsegmente und/oder die Lösbarkeit der Verbindung zwischen benachbarten Wickelkernsegmenten haben den Vorteil, dass der erste Abschnitt des Wickelkerns einfach, schnell und kostengünstig ganz oder teilweise entfernt bzw. gegebenenfalls ganz oder teilweise wieder hinzugefügt werden kann nach einem vorherigen Entfernen.

Erfindungsgemäß ist vorgesehen, dass beim Entfernen eines oder mehrerer Wickelkernsegmente ein erstes Ende eines verbleibenden Wickelkernsegments zur Formung der Nabenanschlussgeometrie dient. Auch in diesem Fall kann vorzugsweise durch das Entfernen eines oder mehrerer Wickelkernsegmente ein Blattende mit insbesondere einer verkürzten Längserstreckung hergestellt werden. In diesem Fall dient dann das erste Ende desjenigen verbleibenden Wickelkernsegments zur Formung der Nabenanschlussgeometrie, welches am weitesten entfernt liegt vom zweiten Abschnitt, d.h. welches dem zweiten Ende des zweiten Abschnitts, das zur Formung der Außenblattanschlussgeometrie dient, gegenüberliegt und, insbesondere für einen verkürzten Wickelkern, das dem zweiten Ende gegenüberliegende erste Ende dieses verkürzten Wickelkerns darstellt.

In einer weiteren bevorzugten Fortbildungsform ist vorgesehen, dass das erste Ende des zweiten Abschnitts dem ersten Ende des ersten Abschnitts entspricht und/oder dass das erste Ende eines oder mehrerer oder aller Wickelkernsegmente dem ersten Ende des ersten Abschnitts entspricht.

Diese Ausführungsform hat den Vorteil, dass unterschiedliche Blattenden hergestellt werden können, die jedoch die gleiche Nabenanschlussgeometrie aufweisen.

Vorzugsweise entsprechen sich das erste Ende des zweiten Abschnitts und das erste Ende des ersten Abschnitts bzw. das erste Ende eines, mehrerer oder aller Wickelkernsegmente hinsichtlich ihres Durchmessers, insbesondere ihres Innen- und/oder Außendurchmessers und/oder hinsichtlich ihrer Form.

Mit dieser Ausführungsform können insbesondere Blattenden hergestellt werden, die sich hinsichtlich ihrer Längserstreckung unterscheiden, hinsichtlich ihrer Nabenanschlussgeometrie jedoch identisch und/oder kompatibel und/oder austauschbar sind.

Gemäß einer weiteren bevorzugten Ausführungsform sind der erste und/oder der zweite Abschnitt im Wesentlichen rotationssymmetrisch ausgebildet. Dies ist insbesondere bevorzugt, um das Wickeln eines Blattendes durch Rotation des Wickelkerns zu realisieren und/oder zu erleichtern. Auch beispielsweise eine elliptische Form wird hier als rotationssymmetrische Form verstanden.

Ferner ist bevorzugt, dass der erste Abschnitt eine im Wesentlichen zylindrische Form aufweist. Da der erste Abschnitt des Wickelkerns in der Regel dazu dient, einen nabennahen Abschnitt des Blattendes zu formen, und ferner dieser erste Abschnitt ausgetauscht oder ganz oder vollständig entfernt werden kann, ist eine zylindrische Ausbildung, insbesondere eine Ausbildung mit einem kreisrunden Querschnitt orthogonal zur Längserstreckung, bevorzugt.

Ferner kann der zweite Abschnitt eine im Wesentlichen zylindrische und/oder im wesentlichen kegelstumpfartige Form aufweisen. Eine Ausführung des zweiten Abschnitts als im wesentlichen zylindrisch hat den Vorteil, dass der gesamte Wickelkern im wesentlichen zylindrisch ausgebildet ist, womit Blattenden entstehen, deren innerer Hohlraum im wesentlichen zylindrisch ausgebildet ist, insbesondere über die gesamte Längserstreckung des Blattendes. Alternativ kann bevorzugt sein, den zweiten Abschnitt im Wesentlichen kegelstumpfförmig auszubilden. In dieser Ausführungsform verjüngt sich der Wickelkern vorzugsweise zum zweiten Ende des zweiten Abschnitts hin. Ferner kann es bevorzugt sein, dass die Form des zweiten Abschnitts des Wickelkerns von einer idealen kegelstumpfförmigen Form abweicht, und die Mantelfläche des Kegelstumpfs gekrümmt ausgebildet ist, sodass im Querschnitt orthogonal zur Längserstreckung des Wickelkerns die Außenkanten des Kegelstumpfs nicht gerade sind. Auch Kombinationen zwischen einer zylindrischen und einer kegelstumpfförmigen Form können im zweiten Abschnitt bevorzugt sein.

Gemäß einem weiteren Aspekt der Erfindung wird die eingangs genannte Aufgabe gelöst durch eine Form zur Herstellung von Hinterkantensegmenten für Rotorblätter von Windenergieanlagen, insbesondere für Blattenden von Rotorblättern von Windenergieanlagen, bei der durch Austausch und/oder Entfernen und/oder Hinzufügen eines oder mehrerer Formsegmente eine Längserstreckung der Form und/oder eine Form der Form und/oder eine maximale Erstreckung der Form orthogonal zur Längserstreckung derart variierbar ist, dass damit hergestellte Hinterkantensegmente für Rotorblätter für Windenergieanlagen mit unterschiedlichen Rotordurchmessern geeignet sind.

Die oben mit Bezug auf ein Blattende eines Rotorblatts dargestellte Problematik sowie die Vorteilhaftigkeit des erfindungsgemäßen Wickelkerns treffen entsprechend auch auf die für solche unterschiedlichen Rotorblätter für Windenergieanlagen mit unterschiedlichem Rotorblattdurchmesser vorgesehenen Hinterkantensegmente zu. Ein Hinterkantensegment dient in der Regel dazu, ein Rotorblatt hinsichtlich seiner Aerodynamik zu verbessern. Bei geteilten Rotorblättern ist das Hinterkantensegment in der Regel zumindest am Blattende, in der Regel in radialer Richtung, befestigt. Um die Variation der mit dem veränderlichen Wickelkern herstellbaren Blattenden auch bezüglich des Hinterkantensegments abzubilden bzw. die Variation gegebenenfalls noch zu vergrößern, ist es von Vorteil, wenn unterschiedliche Hinterkantensegmente schnell, einfach, und kostengünstig erzeugt werden können. Das Bereitstellen einer Form zur Herstellung von Hinterkantensegmenten, welche durch Austausch und/oder Entfernen und oder/Hinzufügen eines oder mehrerer Formsegmente veränderbar ist, hat Vorteile entsprechend den oben mit Bezug auf den Wickelkern genannten Vorteilen. Insbesondere ist es bevorzugt, dass durch den Austausch und/oder das Entfernen und/oder das Hinzufügen eines oder mehrerer Formsegmente eine Längserstreckung der Form und/oder eine Form der Form und/oder eine maximale Erstreckung der Form orthogonal zur Längserstreckung, insbesondere in radialer und/oder tangentialer Richtung, verändert werden kann. Dementsprechend variieren auch die mit dieser Form hergestellten Hinterkantensegmente, insbesondere hinsichtlich ihrer Längserstreckung und/oder ihrer Form und/oder ihrer maximalen Erstreckung orthogonal zur Längserstreckung, insbesondere in radialer und/oder tangentialer Richtung bezogen auf das Rotorblatt, insbesondere das Blattende.

Gemäß einem weiteren Aspekt der Erfindung wird die eingangs genannte Aufgabe gelöst durch ein Verfahren zur Herstellung von Blattenden für Rotorblätter von Windenergieanlagen, umfassend: Bereitstellen eines hier beschriebenen Wickelkerns, Aufwickeln von Faserverbundwerkstoff und eines Matrixmaterials auf den Wickelkern, Aushärten des Matrixmaterials.

Zur Herstellung eines Blattendes mit einem Wickelkern wird, wie auch zumindest teilweise oben bereits beschrieben, zunächst ein hier beschriebener Wickelkern bereitgestellt. Insbesondere ist bevorzugt, dass zur Herstellung eines Blattendes, welches für einen Rotor einer Windenergieanlage mit einem bestimmten Rotordurchmesser geeignet ist, der Wickelkern durch Austauschen, vollständiges oder teilweises Entfernen des ersten Abschnitts an den Rotordurchmesser angepasst wird, insbesondere hinsichtlich der für den Rotordurchmesser gewünschten Längserstreckung des Rotorblatts. Auf dem Wickelkern wird Faserverbundwerkstoff und Matrixmaterial aufgewickelt, wobei der Faserverbundwerkstoff vorzugsweise bahnförmig bereitgestellt und mit einem flüssigen und/oder fließfähigen Matrixmaterial getränkt wird. Vorzugsweise im Anschluss an das Wickeln wird das Matrixmaterial ausgehärtet, so dass ein ausgehärtetes Faserverbundblattende entsteht. Vorzugsweise nach dem Aushärten wird der Wickelkern vom ausgehärteten Faserverbundblattende entfernt.

Gemäß einem weiteren Aspekt der Erfindung wird die eingangs genannte Aufgabe gelöst durch ein Verfahren zur Herstellung von Hinterkantensegmenten für Rotorblätter von Windenergieanlagen, insbesondere für ein Blattende eines Rotorblatts einer Windenergieanlage, umfassend: Bereitstellen einer hier beschriebenen Form, Einbringen von Faserverbundwerkstoff und Matrixmaterial in die Form, Aushärten des Matrixmaterials.

Für die Herstellung von Hinterkantensegmenten wird eine Form zur Herstellung von Hinterkantensegmenten wie hierin beschrieben bereitgestellt, in die Faserverbundwerkstoff und Matrixmaterial eingebracht wird. Vorzugsweise nach dem Aushärten des Matrixmaterials kann das ausgehärtete Hinterkantensegment aus der Form entnommen werden. Zur Herstellung eines Hinterkantensegments, das für einen oder eine Windenergieanlage mit einem bestimmten Rotordurchmesser geeignet ist, wird die Form vorzugsweise an den Rotordurchmesser angepasst, insbesondere durch Austauschen und/oder Entfernen und/oder Hinzufügen eines oder mehrerer Formsegmente.

Gemäß einem weiteren Aspekt Erfindung wird die eingangs genannte Aufgabe gelöst durch ein Verfahren zur Herstellung eines Rotorblatts für eine Windenergieanlage, umfassend Bereitstellen eines Blattendes, das unter Verwendung eines hier beschriebenen Wickelkerns und/oder nach einem hier beschriebenen Verfahren hergestellt ist, Verbinden des Blattendes mit einem oder mehreren Anbauteilen, wie beispielsweise einem Hinterkantensegment, vorzugsweise einem Hinterkantensegment das unter Verwendung einer hier beschriebenen Form und/oder nach einem hier beschriebenen Verfahren hergestellt ist, und/oder einem Außenblatt und/oder einer Blattspitze.

Ein Rotorblatt wird hergestellt, indem ein hierin beschriebenes Blattende bereitgestellt und, vorzugsweise nach seinem Aushärten, mit einem oder mehreren Anbauteilen zu einem Rotorblatt oder einem weiteren Halbzeug für ein Rotorblatt, beispielsweise einer Kombination aus Blattende mit Hinterkantensegment, die dann noch mit einem Außenblatt zu verbinden ist, verbunden wird. Auch das Hinterkantensegment ist vorzugsweise wie hierin beschrieben ausgebildet. Insgesamt ist bevorzugt, dass das Blattende und/oder das Hinterkantensegment derart durch Veränderung des Wickelkerns und/oder der Form hergestellt sind, dass sie für einen bestimmten Rotordurchmesser geeignet sind. Auch das Außenblatt kann vorzugsweise auf den bestimmten Rotordurchmesser abgestimmt sein. Die Verbindung zwischen dem Blattende und dem einer oder mehreren Anbauteilen erfolgt vorzugsweise mittels Verschrauben und/oder Verkleben.

Ferner umfasst ein Rotorblatt für eine Windenergieanlage vorzugsweise ein Blattende, das unter Verwendung eines hierin beschriebenen Wickelkerns und/oder nach einem hierin beschriebenen Verfahren hergestellt ist, sowie ein oder mehrere mit dem Blattende verbundene Anbauteile, beispielsweise ein Hinterkantensegment, vorzugsweise ein Hinterkantensegment, das unter Verwendung einer hierin beschriebenen Form und/oder nach einem hierin beschriebenen Verfahren hergestellt ist, und/oder ein Außenblatt und/oder eine Blattspitze.

Vorzugsweise weist das Außenblatt eine Blattendenanschlussgeometrie zum Anschließen des Außenblatts an die Außenblattanschlussgeometrie des Blattendes auf. Ferner vorzugsweise ist das Außenblatt mit dem Blattende über eine Verbindung der Blattendenanschlussgeometrie mit der Außenblattanschlussgeometrie des Blattendes verbunden.

Vorzugsweise umfasst das Rotorblatt ferner ein Hinterkantensegment, das unter Verwendung einer hierin beschriebenen Form und oder nach einem hierin beschriebenen Verfahren zur Herstellung eines Hinterkantensegments hergestellt ist.

Ferner bevorzugt umfasst eine Windenergieanlage wenigstens ein hierin beschriebenes Rotorblatt. Insbesondere ist bevorzugt, dass die Windenergieanlage einen Turm und eine an dem Turm drehbar gelagerte Gondel umfasst, wobei an der Gondel vorzugsweise ein Rotor mit einer Mehrzahl von Rotorblättern, vorzugsweise drei Rotorblättern, drehbar gelagert ist.

Die eingangs genannte Aufgabe wird ferner gelöst durch eine Rotorblattserie für Windenergieanlagen, umfassend ein erstes Blattende, das unter Verwendung eines hierin beschriebenen Wickelkerns und/oder nach einem hierin beschriebenen Verfahren hergestellt ist, ein zweites Blattende, das unter Verwendung eines hierin beschriebenen Wickelkerns und/oder nach einem hierin beschriebenen Verfahren hergestellt ist, ein erstes Außenblatt und ein zweites Außenblatt, wobei das erste Blattende mit dem ersten Außenblatt zu einem ersten Rotorblatt verbindbar und/oder verbunden ist und das zweite Blattende mit dem zweiten Außenblatt zu einem zweiten Rotorblatt verbindbar und/oder verbunden ist, und das erste Rotorblatt für eine Windenergieanlage mit einem ersten Rotordurchmesser geeignet ist und das zweite Rotorblatt für eine Windenergieanlage mit einem zweiten Rotordurchmesser geeignet ist, wobei der ersten Rotordurchmesser von dem zweiten Rotordurchmesser verschieden ist.

Eine erfindungsgemäße Rotorblattserie zeichnet sich dadurch aus, dass zwei Blattenden mit dem hier beschriebenen Verfahren und/oder dem hier beschriebenen Wickelkern hergestellt werden und mit zwei Außenblättern verbindbar bzw. verbunden sind. Die dabei entstehenden zwei Rotorblätter unterscheiden sich dahingehend, dass sie für Windenergieanlagen mit unterschiedlichen Rotordurchmessern geeignet sind. Diese Unterscheidung der beiden Rotorblätter wird vorzugsweise insbesondere durch eine unterschiedliche Ausgestaltung der beiden Blattenden erreicht, die durch eine Variation des hierin beschriebenen Wickelkerns erzeugt wird. Insbesondere ist eine unterschiedliche Ausgestaltung der beiden Blattenden hinsichtlich ihrer Längserstreckung bevorzugt. Auf diese Weise können auch bei Verwendung von zwei gleich ausgebildeten Außenblättern zwei unterschiedliche Rotorblätter hergestellt werden, die sich insbesondere in ihrer Längserstreckung unterscheiden.

Die Rotorblattserie wird in der Regel nicht an einer einzigen Windenergieanlage verbaut, sondern an unterschiedlichen Windenergieanlagen, die sich hinsichtlich ihres Rotordurchmessers unterscheiden.

Es ist vorgesehen, dass das erste Rotorblatt, insbesondere das erste Blattende, ein erstes Hinterkantensegment aufweist, das unter Verwendung einer hierin beschriebenen Form und/oder nach einem hierin beschriebene Verfahren zur Herstellung eines Hinterkantensegments hergestellt ist. Ergänzend oder alternativ ist vorgesehen, dass das zweite Rotorblatt, insbesondere das zweite Blattende, ein zweites Hinterkantensegment aufweist, das unter Verwendung einer hierin beschriebenen Form und/oder nach einem hierin beschriebenen Verfahren zur Herstellung eines Hinterkantensegments hergestellt ist.

In einer bevorzugten Fortbildungsform der Rotorblattserie sind das erste und das zweite Außenblatt gleich oder verschieden ausgebildet. Die gleiche Ausbildung der beiden Außenblätter hat den Vorteil, dass eine geringere Anzahl an unterschiedlichen Außenblättern vorgehalten werden muss, um unterschiedliche Rotorblätter zu erzeugen.

Im Extremfall kann auch mit nur einer einzigen Sorte Außenblätter durch Variation der Blattenden und/oder Hinterkantensegmente eine Rotorblattserie für zwei, drei oder mehrere verschiedene Rotorblattdurchmesser gebildet werden. Ferner können auch die Außenblätter unterschiedlich ausgebildet sein, insbesondere hinsichtlich ihrer Längserstreckung und/oder ihrer Form und/oder ihrer Blattspitze und oder/weiteren Merkmalen. Durch die Kombination verschiedener Außenblätter mit verschiedenen Blattenden und/oder verschiedenen Hinterkantensegmenten kann eine besonders ausdifferenzierte Rotorblattserie gebildet werden.

Nach einer weiteren Ausbildungsform weist die Rotorblattserie mehr als zwei Blattenden und mehr als zwei Außenblätter auf, aus denen mehr als zwei Rotorblätter gebildet sind. Vorzugsweise können hierbei auch mehr als zwei Hinterkantensegmente vorgesehen sein. In einer solchen Rotorblattserie kann es bevorzugt sein, sämtliche Außenblätter gleich oder verschieden auszubilden. Besonders bevorzugt ist jedoch eine Rotorblattserie, in der einige der Außenblätter gleich ausgebildet sind und andere Außenblätter unterschiedlich ausgebildet sind. Besonders kann es bevorzugt sein, Gruppen von gleich ausgebildeten Außenblättern vorzusehen, die sich jeweils von anderen Gruppen von Außenblättern unterscheiden.

Ferner kann eine Rotorblattserie bevorzugt sein, bei der das erste und das zweite Hinterkantensegment gleich oder verschieden ausgebildet sind. Auch hier können in Rotorblattserien, bei denen drei oder mehr Hinterkantensegmente vorgesehen sind, sämtliche dieser Hinterkantensegmente gleich ausgebildet sein oder sämtliche dieser Hinterkantensegmente unterschiedlich ausgebildet sein. Es kann jedoch auch bevorzugt sein, lediglich einige der Hinterkantensegmente verschieden auszubilden und andere Hinterkantensegmente gleich auszubilden, insbesondere Gruppen von Hinterkantensegmente gleich auszubilden, die sich von Gruppen anderer Hinterkantensegmente unterscheiden.

Zu den Vorteilen, Ausführungsvarianten und Ausführungsdetails dieser weiteren Aspekte der Erfindungen und ihrer jeweiligen Fortbildungen wird auch auf die übrige Beschreibung zu den entsprechenden Vorteilen, Ausführungsvarianten und Ausführungsdetails der jeweils übrigen Aspekte verwiesen.

Bevorzugte Ausführungsformen der Erfindung werden beispielhaft anhand der beiliegenden Figuren beschrieben. Es zeigen:
- Figur 1:: eine schematische Darstellung einer Windenergieanlage;
- Figur 2A:: eine schematische Seitenansicht einer ersten beispielhaften Ausführungsform eines Wickelkerns;
- Figur 2B:: einen gegenüber der in Figur 2A dargestellten Variante verkürzten Wickelkern;
- Figur 2C:: einen gegenüber der in Figur 2B dargestellten Variante nochmals verkürzten Wickelkern;
- Figur 3A:: eine erste beispielhafte Ausführungsform eines Blattendes mit einem Hinterkantensegment;
- Figur 3B: eine weitere beispielhafte Ausführungsform eines Blattendes mit einem Hinterkantensegment;
- Figur 3C:: eine weitere beispielhafte Ausführungsform eines Blattendes mit einem Hinterkantensegment;
- Figur 4A:: eine erste beispielhafte Ausführungsform eines Rotorblatts mit einem Blattende, einem Hinterkantensegmente und einem Außenblatt;
- Figur 4B:: eine weitere beispielhafte Ausführungsform eines Rotorblatts mit einem Blattende, einem Hinterkantensegmente und einem Außenblatt; und
- Figur 4C:: eine weitere beispielhafte Ausführungsform eines Rotorblatts mit einem Blattende, einem Hinterkantensegmente und einem Außenblatt.

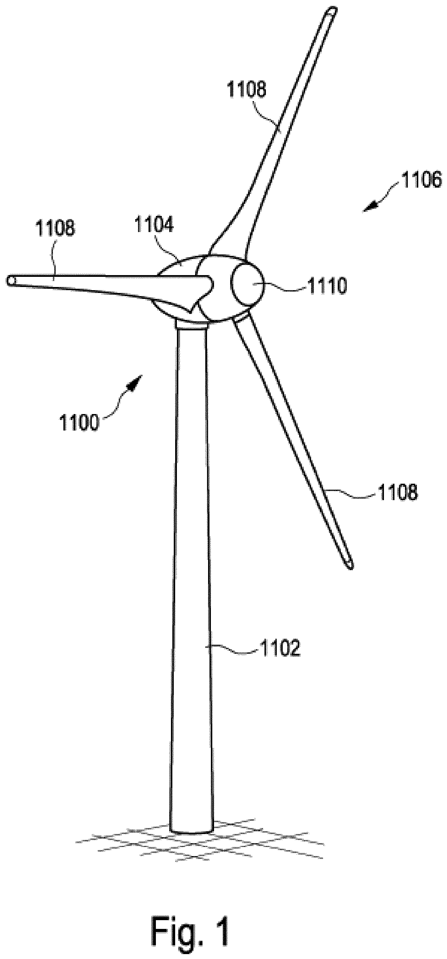

Figur 1 zeigt eine Windenergieanlage 1100 mit einem Turm 1102 und einer Gondel 1104. An der Gondel 1104 ist ein Rotor 1106 mit drei Rotorblättern 1108 und einem Spinner 1110 angeordnet. Der Rotor 1106 wird im Betrieb durch den Wind in eine Drehbewegung versetzt und treibt dadurch einen Generator in der Gondel 1104 an.

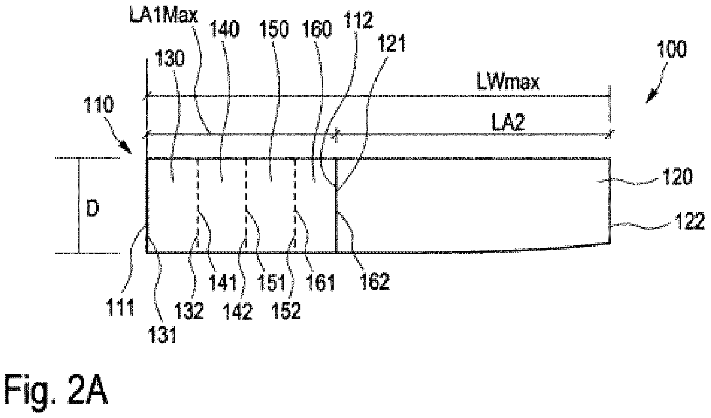

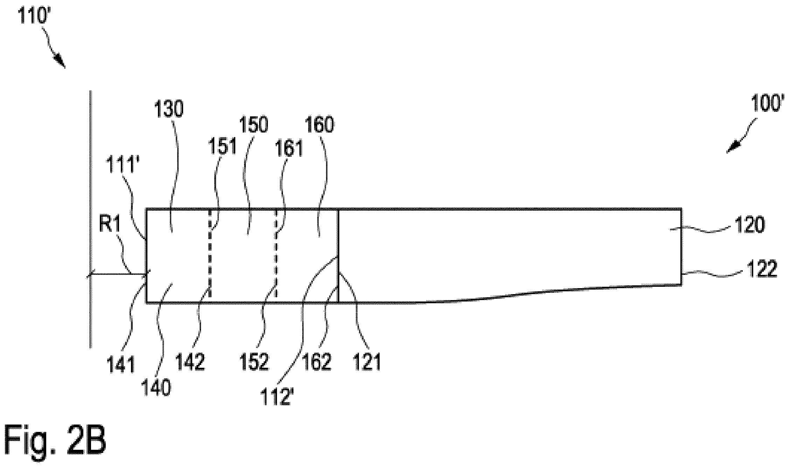

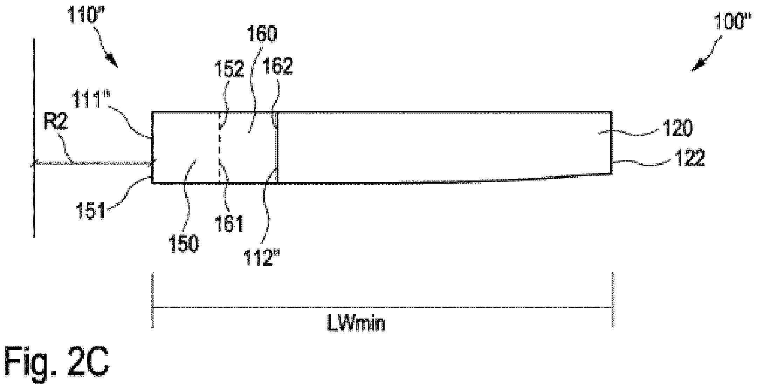

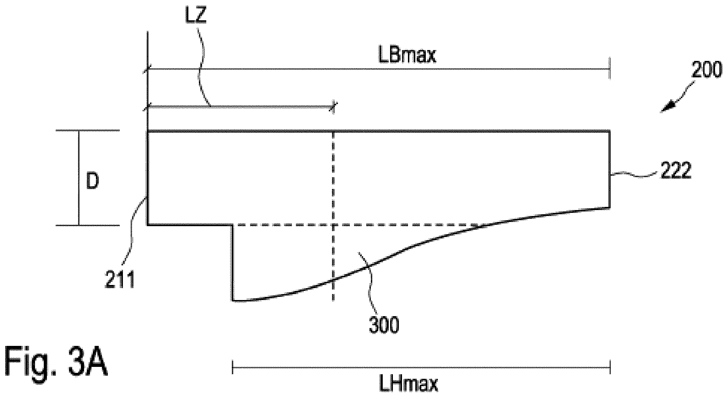

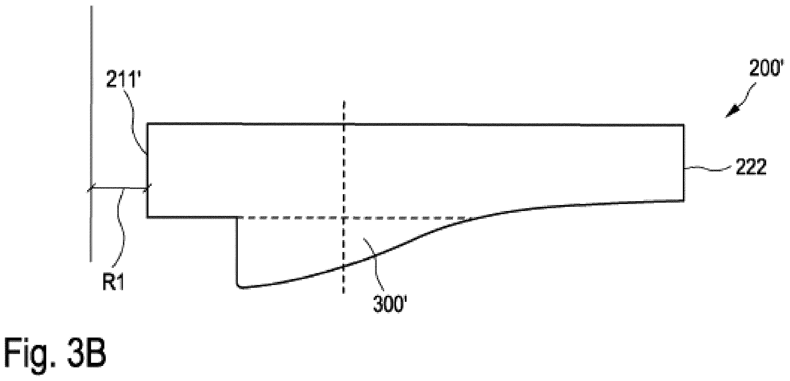

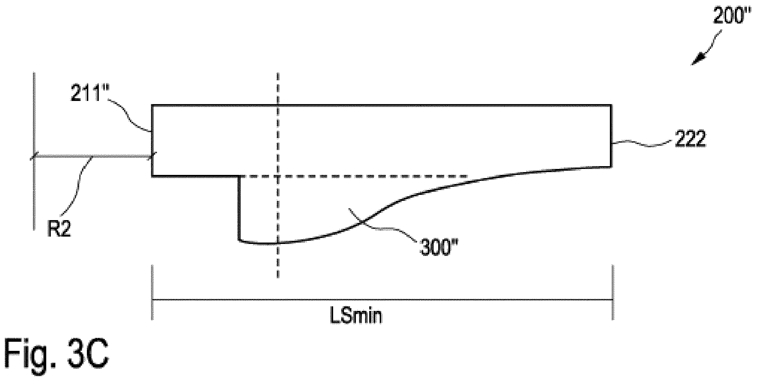

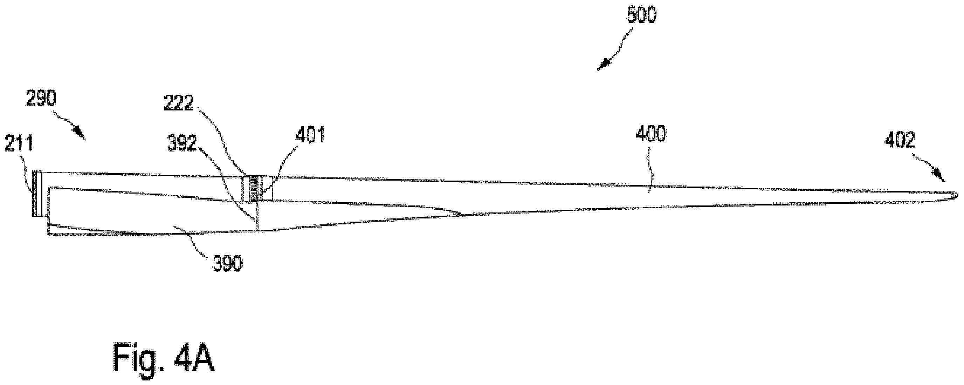

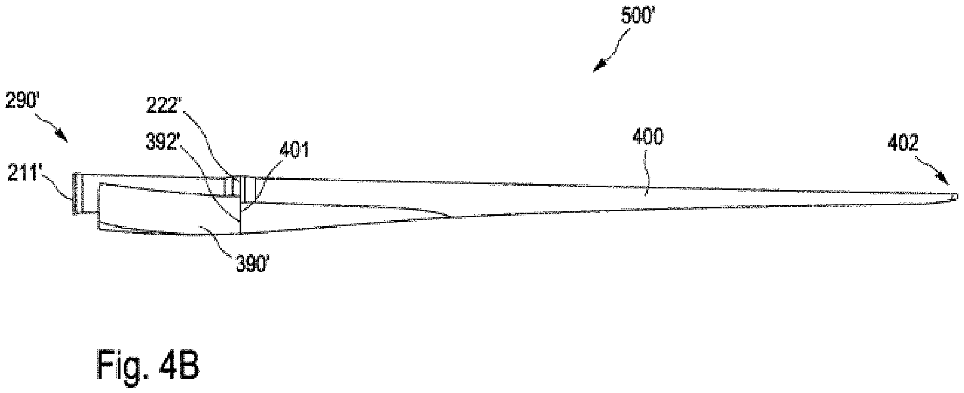

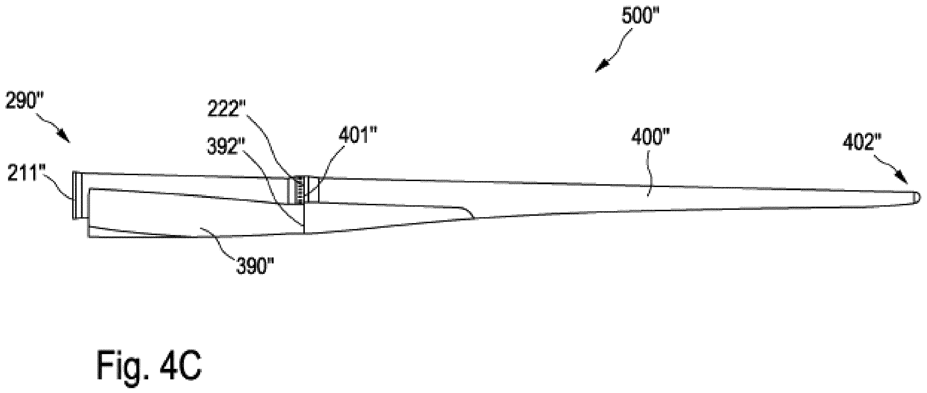

Mindestens eines der Rotorblätter 1108, vorzugsweise alle drei Rotorblätter 1108, sind mit einem Wickelkern gemäß der Figuren 2A, 2B oder 2C hergestellt, weisen ein Blattende mit einem Hinterkantensegmente gemäß den Figuren 3A, 3B oder 3C auf und/oder entsprechen einem Rotorblatt gemäß den Figuren 4A, 4B oder 4C.

In den Figuren 2A, 2B, 2C ist ein Wickelkern 100, 100', 100" dargestellt, der in diesen drei Figuren variiert ist. In den Figuren 3A, 3B, 3C die sind Blattenden 200, 200', 200" mit Hinterkantensegmenten 300, 300', 300" dargestellt, wobei die Blattenden 200, 200', 200" mittels der Varianten des Wickelkerns 100, 100', 100" gemäß den Figuren 2A, 2B, 2C hergestellt sind. In den Figuren 4A, 4B, 4C wiederum sind drei Rotorblätter 500, 500', 500" mit jeweils einem Blattende 290, 290', 290", einem Hinterkantensegment 390, 390', 390" und einem Außenblatt 400, 400" dargestellt, welcher eine Rotorblattserie bilden.

In Figur 2A weist der Wickelkern 100 seine maximale Längserstreckung LWmax auf. In Figur 2B ist der Wickelkern 100' um das Maß R1 gegenüber der in Figur 2A dargestellten Variante verkürzt. In Figur 2C ist der Wickelkern 100" um das Maß R2 gegenüber der in Figur 2A dargestellten Variante verkürzt. Die in den Figuren 2A, 2B, 2C dargestellten Varianten des Wickelkerns 100, 100', 100" unterscheiden sich somit in ihrer Längserstreckung.

Der Wickelkern 100, 100', 100" weist einen ersten Abschnitt 110, 110', 110" sowie einen zweiten Abschnitt 120 auf. Der zweite Abschnitt 120 weist ein erstes Ende 121 und ein diesem gegenüberliegendes zweites Ende 122 auf. Der zweite Abschnitt 120 weist eine Längserstreckung LA2 auf.

Das erste Ende 121 des zweiten Abschnitts 120 ist mit einem zweiten Ende 112 des ersten Abschnitts 110, 110', 110" verbunden.

Das zweite Ende 122 dient dazu, beim Umwickeln des Wickelkerns mit einem Faserverbundwerkstoff und einem Matrixmaterial eine Außenblattanschlussgeometrie eines Blattendes zu formen.

Der in Figur 2A dargestellte Wickelkern 100 dient der Herstellung des in Figur 3A dargestellten Blattendes 200. In Figur 2 weist der Wickelkern 100 einen vollständig vorhandenen ersten Abschnitt 110 auf, der seine maximale Längserstreckung LA1max hat. Ein erstes Ende 111 des ersten Abschnitts 110 dient der Herstellung einer Nabenanschlussgeometrie 211 des Blattendes 200. Am ersten Ende 111 weist der erste Abschnitt 110 einen Durchmesser D, vorzugsweise einen Außendurchmesser, auf.

Der erste Abschnitt 110 weist ferner vier Wickelkernsegmente 130, 140, 150, 160 auf. Die vier Wickelkernsegmente 130, 140, 150, 160 weisen jeweils ein erstes Ende 131, 141, 151, 161 sowie jeweils ein zweites Ende 132, 142, 152, 162 auf. Das zweite Ende 162 des vierten Wickelkernsegments 160 bildet zugleich das zweite Ende 112 des ersten Abschnitts 110. Das erste Ende 131 des ersten Wickelkernsegments 130 bildet zugleich das erste Ende 111 des ersten Abschnitts 110. Die Wickelkernsegmente 130, 140, 150, 160 sind mit dem bzw. den jeweils benachbarten Wickelkernsegment(en) lösbar verbunden.

Mit dem in Figur 2A dargestellten Wickelkern 100 lässt sich das in Figur 3A dargestellte Blattende 200 erzeugen, dessen Längserstreckung LBmax der Längserstreckung LWmax des Wickelkerns 100 entspricht.

Vorzugsweise ist der erste Abschnitt 110 zylindrisch ausgebildet, sodass sich ein 10 Blattende 200 ergibt, das in diesem Bereich LZ zumindest einen zylindrischen inneren Hohlraum aufweist.

Das Hinterkantensegment 300 erstreckt sich nur über einen Teil der Längserstreckung LBmax des Blattendes 200.

Der Wickelkern 100', der in Figur 2B dargestellt ist, dient zur Herstellung des Blattendes 200', dass in Figur 3B dargestellt ist. Wie in beiden Figuren zu erkennen ist, sind sowohl der Wickelkern 100' als auch das Blattende 200' um das Maß R1 gegenüber dem Wickelkern 100 und dem Blattende 200 gemäß den Figuren 2A, 3A in ihrer jeweiligen Längserstreckung verkürzt. Dies wurde erreicht, indem das erste Wickelkernsegment 130 des Wickelkerns 100 entfernt wurde. Die Erstreckung in Längsrichtung des ersten Wickelkernsegments 130 entspricht somit dem Maß der Verkürzung R1.

Das erste Ende 111'des ersten Abschnitts 110'wird beim Wickelkern 100' durch das erste Ende 141 des zweiten Wickelkernsegments 140 gebildet und dient der Formung der Nabenanschlussgeometrie 211'des Blattendes 200'.

Der in Figur 2C dargestellte Wickelkern 100" dient zur Herstellung des in Figur 3C dargestellten Blattendes 200". Das erste Ende 111" des ersten Abschnitts 110" wird beim Wickelkern 100" durch das erste Ende 151 des dritten Wickelkernsegments 150 gebildet und dient der Formung der Nabenanschlussgeometrie 211" des Blattendes 200".

Bei einer bevorzugten zylindrischen Ausbildung des ersten Abschnitts 110, 110', 110" ergibt sich in vorteilhafter Weise auch eine gleichbleibende Nabenanschlussgeometrie 211, 211' 211" der Blattenden 200, 201', 201". Da bei der hier dargestellten Ausführungsform der zweite Abschnitt 120 des Wickelkerns 100, 100', 100" nicht variiert wird, weisen die Blattenden 200, 200', 200" auch eine gleichbleibende Außenblattanschlussgeometrie 222 auf.

Die Hinterkantensegmente 300, 300', 300" erstrecken sich nur über einen Teil der Längserstreckung der Blattenden 200, 200', 200". Die jeweilige Form der Hinterkantensegmente 300, 300', 300", insbesondere eine radiale und/oder tangentiale Erstreckung der Hinterkantensegmente 300, 300', 300" orthogonal zu ihrer Längserstreckung, ist vorzugsweise auf das jeweilige Rotorblattdesign angepasst. Insbesondere ist es bevorzugt, dass die drei Hinterkantensegmente 300, 300', 300" in einer Form zur Herstellung von Hinterkantensegmenten hergestellt werden, wie hierin beschrieben. Insbesondere kann eine Form bevorzugt sein, in der eine Maximalgröße eines Hinterkantensegmente 300, insbesondere eine maximale Längserstreckung LHmax, hergestellt werden kann, und die durch Austausch und/oder Hinzufügen eines oder mehrerer Formsegmente so variiert werden kann, dass mit der gleichen Form auch die Hinterkantensegmente 300', 300" hergestellt werden können.

Die in den Figuren 4A, 4B, 4C dargestellte Rotorblattserie weist drei unterschiedliche Rotorblätter 500, 500', 500" auf. Die beiden Rotorblätter 500, 500' weisen ein gleich ausgebildetes Außenblatt 400 mit einer Blattendenanschlussgeometrie 401 und einer Blattspitze 402 auf. Die Rotorblätter 500, 500' unterscheiden sich durch unterschiedlich ausgebildete Blattenden 290, 290', die mit ihren Außenblattanschlussgeometrien 222, 222' mit den Blattendenanschlussgeometrien 401 der Außenblätter 400 verbunden sind.

Die Rotorblätter 500, 500' unterscheiden sich ferner durch unterschiedlich ausgebildete Hinterkantensegmente 390, 390'. In den in den Figuren 4A, 4B, 4C gezeigten Ausführungsformen weisen auch die Hinterkantensegmente 390, 390', 390" Anschlussgeometrien 392, 392', 392" auf, um auch die Hinterkantensegmente 390, 390', 390" optisch und/oder in Bezug auf die Form und/oder die Anschlussgeometrie an die Außenblätter 400 anzupassen. Die Blattenden 290, 290' unterscheiden sich primär in ihrer Längserstreckung. Vorzugsweise sind die Nabenanschlussgeometrien 211, 211' und die Außenblattanschlussgeometrien 222, 222' jeweils gleich ausgebildet.

Das dritte Rotorblatt 500" unterscheidet sich von den ersten beiden Rotorblättern 500, 500' nicht nur durch ein unterschiedlich ausgebildetes Blattende 290" und ein unterschiedlich ausgebildetes Hinterkantensegment 390", sondern auch durch ein anderes Außenblatt 400". Das Außenblatt 400" hat eine kürzere Längserstreckung als die Außenblätter 400. Die Blattendenanschlussgeometrie 401" kann den Blattendenanschlussgeometrien 401 der Außenblätter 400 entsprechen. Auch die Blattspitze kann den Blattspitzen 402 der Außenblätter 400 entsprechen. Die Blattendenanschlussgeometrie und/oder die Blattspitze 402 können jedoch auch von den Blättern 400 verschieden ausgebildet sein.

Auch die Nabenanschlussgeometrie 211" und/oder die Außenblattanschlussgeometrie 222" und/oder die Anschlussgeometrie 392" können gleich oder verschieden von den entsprechenden Geometrien der Rotorblätter 500, 500' ausgebildet sein.

Die verschiedenen Aspekte der Erfindung, die unter anderem zu der Rotorblattserie führen, haben unter anderem den Vorteil, dass verschiedene Rotorblätter schnell, kostengünstig und zuverlässig hergestellt werden können. Auf diese Weise kann der Aufwand für das Design, die Konstruktion und/oder die Herstellung von unterschiedlichen Rotorblättern für Windenergieanlagen mit unterschiedlichen Rotordurchmessern verringert werden.

## Patentansprüche

1. Wickelkern (100, 100', 100") zur Herstellung von Blattenden (200, 200', 200", 290, 290', 290") für Rotorblätter (1108, 500, 500', 500") von Windenergieanlagen (1100), mit
- einen ersten Abschnitt (110, 110', 110") mit einem ersten Ende (111) zur Formung einer Nabenanschlussgeometrie (211, 211', 211") zum Anschließen des Blattendes (200, 200', 200", 290, 290', 290") an eine Rotornabe,
- einen zweiten Abschnitt (120) mit einem zweiten Ende (122) zur Formung einer Außenblattanschlussgeometrie (222, 222') zum Anschließen des Blattendes (200, 200', 200", 290, 290', 290") an ein Außenblatt (400, 400"),
- wobei durch Austausch oder vollständiges oder teilweises Entfernen des ersten Abschnitts (110, 110', 110") eine Längserstreckung (LA1) des Wickelkerns (100, 100', 100") und/oder ein Durchmesser (D) des ersten Abschnitts (110, 110', 110") und/oder eine Form des ersten Abschnitts (110, 110', 110") derart variierbar ist, dass damit hergestellte Blattenden (200, 200', 200", 290, 290', 290") für Windenergieanlagen (1100) mit unterschiedlichen Rotordurchmessern geeignet sind, wobei
- der erste Abschnitt (110, 110', 110") zwei, drei oder mehr Wickelkernsegmente (130, 140, 150, 160) aufweist, und
- beim Entfernen eines oder mehrerer Wickelkernsegmente (130, 140, 150, 160) ein erstes Ende (131, 141, 151, 161) eines verbleibenden Wickelkernsegments zur Formung der Nabenanschlussgeometrie (211, 211', 211") dient.

2. Wickelkern nach Anspruch 1,
**dadurch gekennzeichnet, dass** beim vollständigen Entfernen des ersten Abschnitts (110, 110', 110") ein erstes Ende (121) des zweiten Abschnitts (120) zur Formung der Nabenanschlussgeometrie (211, 211', 211") dient.

3. Wickelkern nach mindestens einem der vorhergehenden Ansprüche,
**dadurch gekennzeichnet, dass** das erste Ende (121) des zweiten Abschnitts (120) dem ersten Ende (111) des ersten Abschnitts (110, 110', 110") entspricht und/oder dass das erste Ende (131, 141, 151, 161) eines oder mehrerer oder aller Wickelkernsegmente (130, 140, 150, 160) dem ersten Ende (111) des ersten Abschnitts (110, 110', 110") entspricht.

4. Wickelkern nach mindestens einem der vorhergehenden Ansprüche,
**dadurch gekennzeichnet, dass** der erste und/oder der zweite Abschnitt (110, 110', 110", 120) im Wesentlichen rotationssymmetrisch ausgebildet ist bzw. sind.

5. Wickelkern nach mindestens einem der vorhergehenden Ansprüche,
**dadurch gekennzeichnet, dass** der erste Abschnitt (110, 110', 110") eine im Wesentlichen zylindrische Form aufweist.

6. Wickelkern nach mindestens einem der vorhergehenden Ansprüche,
**dadurch gekennzeichnet, dass** der zweite Abschnitt (120) eine im Wesentlichen zylindrische und/oder im Wesentlichen kegelstumpfförmige Form aufweist.

7. Form zur Herstellung von Hinterkantensegmenten (300, 300', 300", 390, 390', 390") für Rotorblätter (1108, 500, 500', 500") von Windenergieanlagen (1100), insbesondere für Blattenden (200, 200', 200", 290, 290', 290") von Rotorblättern (1108, 500, 500', 500") von Windenergieanlagen (1100), bei der durch Austausch und/oder Entfernen und/oder Hinzufügen eines oder mehrerer Formsegmente eine Längserstreckung der Form und/oder eine Form der Form und/oder eine maximale Erstreckung der Form orthogonal zur Längserstreckung derart variierbar ist, dass damit hergestellte Hinterkantensegmente (300, 300', 300", 390, 390', 390") für Rotorblätter (1108, 500, 500', 500") für Windenergieanlagen (1100) mit unterschiedlichen Rotordurchmessern geeignet sind.

8. Verfahren zur Herstellung von Blattenden für Rotorblätter (1108, 500, 500', 500") von Windenergieanlagen (1100), mit folgenden Verfahrensschritten:
- Bereitstellen eines Wickelkerns (100, 100', 100") nach mindestens einem der vorhergehenden Ansprüche 1-6,
- Aufwickeln von Faserverbundwerkstoff und eines Matrixmaterials auf den Wickelkern,
- Aushärten des Matrixmaterials.

9. Verfahren zur Herstellung von Hinterkantensegmenten (300, 300', 300", 390, 390', 390") für Rotorblätter (1108, 500, 500', 500") von Windenergieanlagen (1100), insbesondere für ein Blattende (200, 200', 200", 290, 290', 290") eines Rotorblatts (1108, 500, 500', 500") einer Windenergieanlage (1100), mit folgenden Verfahrensschritten:
- Bereitstellen einer Form nach dem vorhergehenden Anspruch 7,
- Einbringen von Faserverbundwerkstoff und Matrixmaterials in die Form,
- Aushärten des Matrixmaterials.

10. Verfahren zur Herstellung eines Rotorblatts (1108, 500, 500', 500") für eine Windenergieanlage (1100), **gekennzeichnet durch**:
- Bereitstellen eines Blattendes (200, 200', 200", 290, 290', 290"), das unter Verwendung eines Wickelkerns (100, 100', 100") nach mindestens einem der vorhergehenden Ansprüche 1-6 und/oder nach einem Verfahren nach dem vorhergehenden Anspruch hergestellt ist,
- Verbinden des Blattendes (200, 200', 200", 290, 290', 290") mit einem oder mehreren Anbauteilen, wie beispielsweise einem Hinterkantensegment (300, 300', 300", 390, 390', 390"), vorzugsweise einem Hinterkantensegment (300, 300', 300", 390, 390', 390") das unter Verwendung einer Form nach dem vorhergehenden Anspruch 7 und/oder nach einem Verfahren nach dem vorhergehenden Anspruch 9 hergestellt ist, und/oder einem Außenblatt (400, 400") und/oder einer Blattspitze (402').

11. Rotorblattserie für Windenergieanlagen, umfassend
- ein erstes Blattende (290), das unter Verwendung eines Wickelkerns (100, 100', 100") nach mindestens einem der vorhergehenden Ansprüche 1-6 und/oder nach einem Verfahren nach dem vorhergehenden Anspruch 8 hergestellt ist,
- ein zweites Blattende (290"), das unter Verwendung eines Wickelkerns nach mindestens einem der vorhergehenden Ansprüche 1-6 und/oder nach einem Verfahren nach dem vorhergehenden Anspruch 8 hergestellt ist,
- ein erstes Außenblatt (400) und ein zweites Außenblatt (400"),
- wobei das erste Blattende (290) mit dem ersten Außenblatt (400) zu einem ersten Rotorblatt (500) verbindbar und/oder verbunden ist und das zweite Blattende (290") mit dem zweiten Außenblatt (400") zu einem zweiten Rotorblatt (500") verbindbar und/oder verbunden ist, und
- das erste Rotorblatt (500) für eine Windenergieanlage mit einem ersten Rotordurchmesser geeignet ist und das zweite Rotorblatt (500") für eine Windenergieanlage mit einem zweiten Rotordurchmesser geeignet ist, wobei der ersten Rotordurchmesser von dem zweiten Rotordurchmesser verschieden ist, wobei
- das erste Rotorblatt (500), insbesondere das erste Blattende (290), ein erstes Hinterkantensegment aufweist, das unter Verwendung einer Form nach Anspruch 7 und/oder nach einem Verfahren zur Herstellung eines Hinterkantensegments nach Anspruch 9 hergestellt ist und/oder
- das zweite Rotorblatt (500"), insbesondere das zweite Blattende (290"), ein zweites Hinterkantensegment aufweist, das unter Verwendung einer Form nach Anspruch 7 und/oder nach einem Verfahren zur Herstellung eines Hinterkantensegments nach Anspruch 9 hergestellt ist

## Claims

1. A winding core (100, 100', 100") for producing blade ends (200, 200' 200", 290, 290', 290") for rotor blades (1108, 500, 500', 500") of wind power installations (1100), comprising
- a first section (110, 110', 110") with a first end (111) for forming a hub connection geometry (211, 211', 211") for connecting the blade end (200, 200', 200", 290, 290', 290") to a rotor hub,
- a second section (120) with a second end (122) for forming an outer blade connection geometry (222, 222') for connecting the blade end (200, 200', 200", 290, 290', 290") to an outer blade (400, 400"),
- wherein it is possible by exchanging or completely or partially removing the first section (110. 100', 110") to vary a longitudinal extent (LA1) of the winding core (100, 100', 100") and/or a diameter (D) of the first section (110, 110', 110") and/or a shape of the first section (110, 110', 110") such that blade ends produced therewith (200, 200', 200", 290, 290', 290") are suitable for wind power installations (1100) with different rotor diameters, wherein
- the first section (110, 110', 110") comprises two, three or more winding core segments (130, 140, 150, 160), and
- with the removal of one or more winding core segments (130, 140, 150, 160), a first end (131, 141, 151, 161) of a remaining winding core segment is used for forming the hub connection geometry (211, 211', 211").

2. The winding core as claimed in claim,
**characterized in that**, with the complete removal of the first section (110, 110', 110"), a first end (121) of the second section (120) is used for forming the hub connection geometry (211, 211', 211").

3. The winding core as claimed in at least one of the preceding claims, **characterized in that** the first end (121) of the second section (120) corresponds to the first end (111) of the first section (110, 110', 110") and/or **in that** the first end (131, 141, 151, 161) of one or more or all of the winding core segments (130, 140, 150, 160) corresponds to the first end (111) of the first section (110, 110', 110").

4. The winding core as claimed in at least one of the preceding claims, **characterized in that** the first portion and/or the second portion (110, 110', 110", 120) is/are formed essentially rotationally symmetrically.

5. The winding core as claimed in at least one of the preceding claims, **characterized in that** the first section (110, 110', 110") has an essentially cylindrical shape.

6. The winding core as claimed in at least one of the preceding claims, **characterized in that** the second section (120) has an essentially cylindrical and/or essentially frustoconical shape.

7. A mold for producing trailing edge segments (300, 300', 300", 390, 390', 390") for rotor blades (1108, 500, 500', 500") of wind power installations (1100), in particular for blade ends (200, 200', 200", 290, 290', 290") of rotor blades (1108, 500, 500', 500") of wind power installations (1100),
with which it is possible by exchanging and/or removing and/or adding one or more mold segments to vary a longitudinal extent of the mold and/or a shape of the mold and/or a maximum extent of the mold orthogonal to the longitudinal extent in such a way that trailing edge segments (300, 300', 300", 390, 390', 390") produced therewith are suitable for rotor blades (1108, 500, 500', 500") for wind power installations (1100) with different rotor diameters.

8. A method for producing blade ends for rotor blades (1108, 500, 500', 500") of wind power installations (1100),
comprising following steps:
- providing a winding core (100, 100', 100") as claimed in at least one of the preceding claims 1-6,
- winding fiber composite material and a matrix material onto the winding core,
- curing the matrix material.

9. A method for producing trailing edge segments (300, 300', 300", 390, 390', 390") for rotor blades (1108, 500, 500', 500") of wind power installations (1100), in particular for a blade end (200, 200', 200", 290, 290', 290") of a rotor blade (1108, 500, 500', 500") of a wind power installation (1100), comprising following steps:
- providing a mold as claimed in the preceding claim 7,
- introducing fiber composite material and matrix material into the mold,
- curing the matrix material.

10. A method for producing a rotor blade (1108, 500, 500', 500") for a wind power installation (1100),
**characterized by**:
- providing a blade end (200, 200', 200", 290, 290', 290") that is produced by using a winding core (100, 100', 100") as claimed in at least one of the preceding claims 1-6 and/or by a method as claimed in the preceding claim,
- connecting the blade end (200, 200', 200", 290, 290', 290") to one or more attachment parts, such as for example a trailing edge segment (300, 300', 300", 390, 390', 390"), preferably a trailing edge segment (300, 300', 300", 390, 390', 390") that is produced by using a mold as claimed in the preceding claim 7 and/or by a method as claimed in the preceding claim 9, and/or an outer blade (400, 400") and/or a blade tip (402').

11. A rotor blade series for wind power installations, comprising
- a first blade end (290) that is produced by using a winding core (100, 100', 100") as claimed in at least one of the preceding claims 1-6 and/or by a method as claimed in the preceding claim 8,
- a second blade end (290") that is produced by using a winding core as claimed in at least one of the preceding claims 1-6 and/or by a method as claimed in the preceding claim 8,
- a first outer blade (400) and a second outer blade (400"),
- the first blade end (290) being connectable and/or connected to the first outer blade (400) to form a first rotor blade (500) and the second blade end (290") being connectable and/or connected to the second outer blade (400") to form a second rotor blade (500"), and
- the first rotor blade (500) being suitable for a wind power installation with a first rotor diameter and the second rotor blade (500") being suitable for a wind power installation with a second rotor diameter, the first rotor diameter being different from the second rotor diameter, wherein
- the first rotor blade (500), particularly the first blade end (290), comprises a first trailing edge segment that is produced by using a form according to claim 7 and/or by a method for producing a trailing edge segment according to claim 9 and /or
- the second rotor blade (500"), particularly the second blade end (290"), comprises a second trailing edge segment that is produced by using a form according to claim 7 and/or by a method for producing a trailing edge segment according to claim 9.

## Revendications

1. Axe d'enroulement (100, 100', 100") pour fabriquer des extrémités de pale (200, 200', 200", 290, 290', 290") pour des pales de rotor (1108, 500, 500', 500") d'éoliennes (1100), avec
- une première section (110, 110', 110") avec une première extrémité (111) pour former une géométrie de raccordement de moyeu (211, 211', 211") pour raccorder l'extrémité de pale (200, 200', 200", 290, 290', 290") à un moyeu de rotor,
- une deuxième section (120) avec une deuxième extrémité (122) pour former une géométrie de raccordement de pale extérieure (222, 222') pour raccorder l'extrémité de pale (200, 200', 200", 290, 290', 290") à une pale extérieure (400, 400"),
- dans lequel par remplacement ou retrait total ou partiel de la première section (110, 110', 110"), une extension longitudinale (LA1) de l'axe d'enroulement (100, 100', 100") et/ou un diamètre (D) de la première section (110, 110', 110") et/ou une forme de la première section (110, 110', 110") peuvent varier de telle manière que des extrémités de pale (200, 200', 200",290, 290', 290") ainsi fabriquées sont adaptées pour des éoliennes (1100) avec des diamètres de rotor différents, dans lequel
- la première section (110, 110', 110") présente deux, trois segments d'axe d'enroulement (130, 140, 150, 160) ou plus, et
lors du retrait d'un ou de plusieurs segments d'axe d'enroulement (130, 140, 150, 160), une première extrémité (131, 141, 151, 161) d'un segment d'axe d'enroulement restant sert à former la géométrie de raccordement de moyeu (211, 211', 211").

2. Axe d'enroulement selon la revendication 1, **caractérisé en ce que** lors du retrait total de la première section (110, 110', 110"), une première extrémité (121) de la deuxième section (120) sert à former la géométrie de raccordement de moyeu (211, 211', 211").

3. Axe d'enroulement selon au moins l'une quelconque des revendications précédentes,
**caractérisé en ce que** la première extrémité (121) de la deuxième section (120) correspond à la première extrémité (111) de la première section (110, 110', 110"), et/ou que la première extrémité (131, 141, 151, 161) d'un ou de plusieurs ou de tous les segments d'axe d'enroulement (130, 140, 150, 160) correspondent à la première extrémité (111) de la première section (110, 110', 110").

4. Axe d'enroulement selon au moins l'une quelconque des revendications précédentes,
**caractérisé en ce que** la première et/ou la deuxième section (110, 110', 110", 120) est ou sont réalisées sensiblement de manière symétrique en rotation.

5. Axe d'enroulement selon au moins l'une quelconque des revendications précédentes,
**caractérisé en ce que** la première section (110, 110', 110") présente une forme sensiblement cylindrique.

6. Axe d'enroulement selon au moins l'une quelconque des revendications précédentes,
**caractérisé en ce que** la deuxième section (120) présente une forme sensiblement cylindrique et/ou sensiblement en forme de cône tronqué.

7. Moule pour fabriquer des segments de bord de fuite (300, 300', 300", 390, 390', 390") pour des pales de rotor (1108, 500, 500', 500") d'éoliennes (1100), en particulier pour des extrémités de pale (200, 200', 200", 290, 290', 290") de pales de rotor (1108, 500, 500', 500") d'éoliennes (1100),
où par le remplacement et/ou le retrait et/ou l'ajout d'un ou de plusieurs segments de moule, une extension longitudinale du moule et/ou une forme du moule et/ou une extension maximale du moule peuvent varier de manière orthogonale par rapport à l'extension longitudinale de telle manière que des segments de bord de fuite (300, 300', 300", 390, 390', 390") ainsi fabriqués pour des pales de rotor (1108, 500, 500', 500") sont adaptés pour des éoliennes (1100) avec différents diamètres de rotor.

8. Procédé pour fabriquer des extrémités de pale pour des pales de rotor (1108, 500, 500', 500") d'éoliennes (1100), avec des étapes de procédé suivantes :
- de fourniture d'un axe d'enroulement (100, 100', 100") selon au moins l'une quelconque des revendications précédentes 1 - 6,
- d'enroulement de matériau composite à base de fibres et d'un matériau de matrice sur l'axe d'enroulement,
- de durcissement du matériau de matrice.

9. Procédé pour fabriquer des segments de bord de fuite (300, 300', 300", 390, 390', 390") pour des pales de rotor (1108, 500, 500', 500") d'éoliennes (1100), en particulier pour une extrémité de pale (200, 200', 200" , 290, 290', 290") d'une pale de rotor (1108, 500, 500', 500") d'une éolienne (1100), avec des étapes de procédé suivantes :
- de fourniture d'un moule selon la revendication 7 précédente,
- d'introduction de matériau composite à base de fibres et d'un matériau de matrice dans le moule,
- de durcissement du matériau de matrice.

10. Procédé pour fabriquer une pale de rotor (1108, 500, 500', 500") pour une éolienne (1100), **caractérisé par**
- la fourniture d'une extrémité de pale (200, 200', 200", 290, 290', 290"), qui est fabriquée en utilisant un axe d'enroulement (100, 100', 100") selon au moins l'une quelconque des revendications 1 - 6 et/ou selon un procédé selon la revendication précédente,
- l'assemblage de l'extrémité de pale (200, 200', 200", 290, 290', 290") à un ou à plusieurs composants rapportés, comme un segment de bord de fuite (300, 300', 300", 390, 390', 390"), de préférence un segment de bord de fuite (300, 300', 300", 390, 390', 390"), qui est fabriqué en utilisant un moule selon la revendication précédente 7 et/ou selon un procédé selon la revendication précédente 9, et/ou à une pale extérieure (400, 400") et/ou à une pointe de pale (402').

11. Série de pales de rotor pour des éoliennes, comprenant
- une première extrémité de pale (290), qui est fabriquée en utilisant un axe d'enroulement (100, 100', 100") selon au moins l'une quelconque des revendications précédentes 1 - 6 et/ou selon un procédé selon la revendication précédente 8,
- une deuxième extrémité de pale (290"), qui est fabriquée en utilisant un axe d'enroulement selon au moins l'une quelconque des revendications précédentes 1 - 6 et/ou selon un procédé selon la revendication précédente 8,
- une première pale extérieure (400) et une deuxième pale extérieure (400"),
- dans lequel la première extrémité de pale (290) peut être assemblée et/ou est assemblée à la première pale extérieure (400) en une première pale de rotor (500), et la deuxième extrémité de pale (290") peut être assemblée et/ou est assemblée à la deuxième pale extérieure (400") en une deuxième pale de rotor (500"), et
- la première pale de rotor (500) est adaptée pour une éolienne avec un premier diamètre de rotor et la deuxième pale de rotor (500") est adaptée pour une éolienne avec un deuxième diamètre de rotor, dans lequel le premier diamètre de rotor est différent du deuxième diamètre de rotor, dans lequel
- la première pale de rotor (500), en particulier la première extrémité de pale (290), présente un premier segment de bord de fuite, qui est fabriqué en utilisant un moule selon la revendication 7 et/ou selon un procédé pour fabriquer un segment de bord de fuite selon la revendication 9, et/ou
- la deuxième pale de rotor (500"), en particulier la deuxième extrémité de pale (290"), présente un deuxième segment de bord de fuite, qui est fabriqué en utilisant un moule selon la revendication 7 et/ou selon un procédé pour fabriquer un segment de bord de fuite selon la revendication 9.
